(19)

Europäisches Patentamt

European Patent Office

Office européen des brevets

(11)    **EP 3 242 035 B1**

(12)                     **EUROPÄISCHE PATENTSCHRIFT**

| | |
|---|---|
| (45) Veröffentlichungstag und Bekanntmachung des Hinweises auf die Patenterteilung:<br>**18.08.2021   Patentblatt 2021/33** | (51) Int Cl.:<br>**F04D 13/12** *(2006.01)*     **F04D 15/00** *(2006.01)* |

(21) Anmeldenummer: **16207135.1**

(22) Anmeldetag: **28.12.2016**

---

(54) **VERFAHREN ZUM BETREIBEN MINDESTENS EINES PUMPENAGGREGATES VON EINER VIELZAHL VON PUMPENAGGREGATEN**

METHOD FOR OPERATING AT LEAST ONE PUMP UNIT OF A PLURALITY OF PUMP UNITS

PROCÉDÉ DE FONCTIONNEMENT D'AU MOINS UN GROUPE MOTOPOMPE PARMI UNE PLURALITÉ DE GROUPES MOTOPOMPE

---

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.11.2017   Patentblatt 2017/45**

(73) Patentinhaber: **Grundfos Holding A/S**
**8850 Bjerringbro (DK)**

(72) Erfinder:
• **Karkov, Jørgen**
**7600 Struer (DK)**

• **Nørskov, Kris**
**8220 Brabrand (DK)**
• **Skovmose, Carsten**
**8800 Viborg (DK)**

(74) Vertreter: **Patentanwälte Vollmann Hemmer Lindfeld**
**Partnerschaft mbB**
**Wallstraße 33a**
**23560 Lübeck (DE)**

(56) Entgegenhaltungen:
**EP-A1- 2 151 578          WO-A1-2013/041616**
**WO-A1-2013/149281     US-A1- 2015 095 100**

EP 3 242 035 B1

**Beschreibung**

Die Erfindung betrifft ein Verfahren zum Betreiben mindestens eines Pumpenaggregates von einer Vielzahl von Pumpenaggregaten, die jeweils eine programmierbare elektronische Motorsteuerung für einzelne oder Gruppen von Pumpen aufweisen und die über ein Netzwerk zumindest zeitweise mit einem Server datenverbunden sind. Die Erfindung betrifft weiter ein Flüssigkeitspumpensystem mit einer Vielzahl von Pumpenaggregaten mit programmierbarer elektronischer Motorsteuerung.

Aus WO 2013/041616 A1 zählt es zum Stand der Technik, ein frequenzumrichtergesteuertes Pumpenaggregat mit einem Programmiermodul auszustatten, über welches mittels einer Schnittstelle mittels eines externen Gerätes gegebenenfalls unter Anbindung einer internetbasierten Datenbank Programmteile zum Betrieb des Pumpenaggregates runtergeladen, freigeschaltet oder gegebenenfalls auch hochgeladen werden können. Hierdurch können Funktionalitäten des Pumpenaggregates individuell konfiguriert werden, wobei diese Programmteile gegebenenfalls auch auf eine externe Pumpe, ein Ventil oder ein anderes Steuerelement zugreifen können.

Pumpenaggregate mit programmierbarer elektronischer Motorsteuerung, deren Drehzahl in weiten Bereichen variierbar ist, werden heutzutage standardmäßig in zahlreichen Anwendungen, sei es in der Abwassertechnik, in der Brauchwassertechnik, in der Heizungs- und Klimatechnik und dergleichen eingesetzt. Die Varianz der Einstellmöglichkeiten erschwert es häufig, das Pumpenaggregat energetisch günstig zu betreiben, das heißt in energetisch optimierten Betriebspunkten zu fahren. So kommt es in der Praxis vor, dass trotz Einsatz dieser anspruchsvollen Technik der Betrieb der Pumpenaggregate energetisch günstiger erfolgen könnte. Dies führt nicht nur zu erhöhten Betriebskosten, sondern kann beispielsweise bei zu hohen Drehzahlen zu Geräuschemissionen, zu vorzeitigem Verschleiß und anderen Problemen führen.

Hinzukommt, dass das hydraulische Ausmessen solcher programmierbarer, das heißt drehzahlsteuerbarer Pumpenaggregate, extrem aufwendig ist, so dass herstellerseitig, wenn überhaupt, nur einige wenige Pumpenaggregate vermessen werden, weshalb die den Pumpenaggregaten zugrunde gelegten Kennlinien ungenau sein können. Auch dies kann dazu führen, dass das Pumpenaggregat nicht im energetisch günstigsten Bereich betrieben wird.

Aus CN 202284531 U zählt es zum Stand der Technik, die Betriebsdaten eines Pumpenaggregates einer cloudbasierten Datenbank zu übermitteln und anhand der gespeicherten Daten zu überprüfen, ob das Pumpenaggregat bestimmungsgemäß läuft. Weiterhin zählt es zum Stand der Technik, die Parameter des Pumpenaggregates anhand der in der Datenbank gespeicherten Daten zu ermitteln und im Falle von Abweichungen diese neu ermittelten Parameter pumpenaggregatseitig zu ersetzen.

Aus WO 2013/149281 A1 zählt es zum Stand der Technik, ein Pumpenaggregat eines Abwassersystems drahtlos in ein Netzwerk einzubinden, in das weitere Aggregate eingebunden sein können und welches das System überwacht, Systemdaten speichert und Steuerfunktionen auslöst.

Anmelderseitig ist unter Grundfos GRM ein cloudbasiertes Datenbanksystem bekannt, bei welchem Betriebsdaten von Pumpenaggregaten weltweit in die Datenbank hochgeladen werden. Diese Daten stehen dann dem zuständigen Wartungstechniker zur Verfügung, so dass dieser anhand des Datenverlaufs zum einen Abweichungen vom bestimmungsgemäßen Betrieb und zum anderen Tendenzen hinsichtlich möglicher Verschleißteile erkennen kann. So kann beispielsweise anhand der dort gespeicherten Betriebsstundenzahl abgeschätzt werden, wann Dichtungen auszutauschen oder andere Servicearbeiten zu erledigen sind.

Aus US 2015/0095100 A1 zählt es zum Stand der Technik, eine Vielzahl von Tauchpumpen zu betreiben, deren hydraulische Daten zu erfassen und diese zu verarbeiten und statistisch auszuwerten, um diese Pumpen dann so anzusteuern, dass sie energetisch optimiert betrieben werden.

Ausgehend von dem letzt genannten Stand der Technik liegt der Erfindung die Aufgabe zugrunde, ein Verfahren zum Betreiben mindestens eines Pumpenaggregats von einer Vielzahl von Pumpenaggregaten, die jeweils eine programmierbare elektronische Motorsteuerung für einzelne oder Gruppen von Pumpen aufweisen und die über ein Netzwerk zumindest zeitweise mit einem Server datenverbunden sind, bei dem Daten, insbesondere Parameter und/oder Betriebsdaten der Vielzahl von Pumpenaggregaten über das Netzwerk zu einem Server übermittelt und dort in einer Datenbank gespeichert werden und gespeicherte Daten nach vorgegebenen Rechenregel verarbeitet werden, wonach dann das mindestens eine Pumpenaggregat anhand der verarbeiteten Daten über das Netzwerk in seiner Programmierung angepasst wird, zu verbessern und im Weiteren ein Flüssigkeitspumpensystem zur Ausführung eines solchen Verfahrens vorzuschlagen.

Der verfahrensmäßige Teil dieser Aufgabe wird durch ein Verfahren zum Betreiben mindestens eines Pumpenaggregates von einer Vielzahl von Pumpenaggregaten gemäß Anspruch 1 gelöst, wobei ein Flüssigkeitspumpensystem zur Ausführung dieses Verfahrens durch die in Anspruch 7 angegebenen Merkmale gekennzeichnet ist.

Das erfindungsgemäße Verfahren zum Betreiben mindestens eines Pumpenaggregates von einer Vielzahl von Pumpenaggregaten, die jeweils eine programmierbare elektronische Motorsteuerung für einzelne oder Gruppen von Pumpen aufweisen und die über ein Netzwerk zumindest zeitweise mit einem Server datenverbunden sind, bei dem Daten, insbesondere Parameter und/oder Betriebsdaten der Vielzahl von Pumpenaggregaten über das Netzwerk zu einem Server übermittelt und dort in einer Datenbank gespeichert werden, wobei gespeicherte Daten nach vorgegebenen Rechenregeln verarbeitet werden und danach dann das mindestens eine Pumpenaggregat anhand der verarbeiteten Daten über das Netzwerk in seiner Programmierung angepasst wird, ist dadurch gekennzeichnet, dass bei einer ersten Gruppe von Pumpenaggregaten Betriebsdaten anhand elektrischer Größen des Antriebs sowie mindestens einer erfassten hydraulischen Größe ermittelt werden und dass bei einer zweiten Gruppe von typgleichen Pumpenaggregaten Betriebsdaten anhand elektrischer Größen des Antriebs erfasst werden und dass serverseitig die Betriebsdaten der zweiten Gruppe von Pumpenaggregaten unter Zugrundelegung der erfassten hydraulischen Daten der ersten Gruppe in der Programmierung angepasst werden.

Grundgedanke ist es, durch datenbankmäßige Erfassung von einer Vielzahl von Betriebs- und Einstellungsdaten von im Betrieb befindlichen Pumpenaggregaten und durch statistische Algorithmen diese auszuwerten und anhand dieser Daten das einzelne Pumpenaggregat in seiner Programmierung gegebenenfalls anzupassen, wenn sich nach Auswertung herausstellen sollte, dass dieses zum Beispiel nicht im energetisch günstigen Bereich betrieben wird. Das erfindungsgemäße Verfahren ist jedoch nicht darauf beschränkt, gegebenenfalls den Betriebspunkt des Pumpenaggregates anzupassen, sondern ermöglicht beispielsweise auch die Parameter der in den elektronischen Motorsteuerungen hinterlegten mathematischen Modellen, welche die Verknüpfung der elektrischen Daten des Motors mit den hydraulischen Daten der Pumpe bestimmen, anzupassen. Auch können anhand der serverseitig gespeicherten Daten fehlerhaft arbeitende Sensoren oder andere Bauteile ermittelt werden, in dem festgestellt wird, dass die von dem Pumpenaggregat übermittelten Daten nicht konsistent sind. Schließlich ermöglicht das erfindungsgemäße Verfahren, die werkseitig vorgegebenen Pumpenkurven in der elektronischen Steuerung eines Pumpenaggregates hinsichtlich ihrer Übereinstimmung mit dem tatsächlichen Verhalten des Pumpenaggregates zu verbessern. Vorteilhafter Weise werden nicht nur die zum Server übermittelten Daten gespeichert, sondern auch das Resultat der Verarbeitung der übermittelten Daten.

Die Datenübertragung zwischen den Pumpenaggregaten und der cloudbasierten Datenbank erfolgt vorzugsweise drahtlos, kann jedoch auch drahtgebunden erfolgen.

Unter Pumpenaggregat im Sinne der vorliegenden Erfindung ist eine Pumpe, beispielsweise eine Kreiselpumpe mit einem elektrischen Antriebsmotor und einer dem Motor vorgeschalteten elektronischen Motorsteuerung zu verstehen. Dabei ist die elektronische Motorsteuerung typischerweise Teil eines Stromrichters/Frequenzumrichters, mit welchem die Drehzahl der Pumpe in weiten Bereichen eingestellt werden kann. Pumpenaggregat im Sinne der vorliegenden Erfindung kann auch eine Pumpenaggregatgruppe sein, bei welcher mehrere Pumpenaggregate einer gemeinsamen Steuerung zugeordnet sind.

Gemäß einer vorteilhaften Weiterbildung des erfindungsgemäßen Verfahrens werden die Daten von Pumpenaggregaten unterschiedlicher Typen in der Datenbank erfasst und zum Zwecke der Verarbeitung gruppiert. Dabei ist es vorteilhaft, wenn es sich bei der Datenbank um eine relationale Datenbank handelt, das heißt die Gruppierung an sich nicht notwendigerweise datenbankmäßig erfolgen muss, sondern vorteilhaft erst bei Auswertung der Datenbank. So kann es zum Beispiel sinnvoll sein, bei sogenannten Boosterpumpen, bei denen es sich typischerweise um eine Gruppe von mehreren Pumpenaggregaten handelt, denen eine gemeinsame elektronische programmierbare Steuerung vorgeschaltet ist, diese Gruppe von Pumpenaggregaten einerseits quasi als ein Pumpenaggregat zu betrachten, aber auch die Einzelpumpenaggregate einer solchen Boosterpumpe zu betrachten, welche jeweils selbst eine programmierbare elektronische Motorsteuerung aufweisen, je nachdem welche statistische Auswertung vorgenommen werden soll. Vorteilhaft werden natürlich solche unterschiedlichen Gruppen von Daten von Pumpenaggregaten in der Datenbank vorab gruppiert, deren Daten ohnehin nicht miteinander in einen sinnvollen Zusammenhang gebracht werden können.

Gemäß des erfindungsgemäßen Verfahren werden bei einer ersten Gruppe von Pumpenaggregaten, bei denen Betriebsdaten anhand elektrischer Größen des Antriebs sowie mindestens einer erfassten hydraulischen Größe ermittelt werden, mit den Betriebsdaten einer zweiten Gruppe von typgleichen Pumpenaggregaten, bei denen die Betriebsdaten nur anhand elektrischer Größen des Antriebs erfasst werden, verglichen und serverseitig die Betriebsdaten der zweiten Gruppe von Pumpenaggregaten unter Zugrundelegung der erfassten hydraulischen Daten der ersten Pumpe in ihrer Programmierung angepasst. Dieses Verfahren hat den Vorteil, dass auch die Pumpenaggregate, welche keine Sensorik zur Erfassung einer hydraulischen Größe aufweisen oder mit einer solchen verbunden sind, quasi so betrieben werden können, als hätten sie eine solche. Auch wenn dies nur in gewissen Grenzen realisierbar ist, so kann damit doch zumindest die Genauigkeit der Betriebspunkterfassung und damit auch die Steuerung des Pumpenaggregates erheblich präzisiert werden und dies auch ohne Einsatz von hydraulischer Sensorik.

Gemäß einer bevorzugten Variante des erfindungsgemäßen Verfahrens werden Daten, insbesondere Betriebsdaten typgleicher Pumpenaggregate statistisch ausgewertet und dann mindestens ein Pumpenaggregat, wenn es eine vorbestimmte Abweichung von den ausgewerteten Daten aufweist, in seiner Programmierung angepasst. Diese datenbankmäßige Auswertung erfolgt vorzugsweise durch einen externen Server, der softwaremäßig implementiert oder hardwaremäßig vorgesehen sein kann, sei es in einem externen Rechenzentrum oder einem herstellerseitigen Rechenzentrum. Das erfindungsgemäße Verfahren kann dabei vorteilhaft auch dazu eingesetzt werden, die Parameter/Betriebsdaten von Pumpenaggregaten anzupassen, die hinsichtlich ihrer Sensorik unterschiedlich ausgestattet sind. So zählt es zum Stand der Technik bei Pumpenaggregaten, die keinen Durchflusssensor haben, den Durchfluss anhand elektrischer Daten der Motorsteuerung zu bestimmen. Vergleicht man nun mit dem erfindungsgemäßen Verfahren im Betrieb befindliche typgleiche Pumpenaggregate, von denen einige mit einem Durchflusssensor ausgestattet sind und andere nicht, also die Betriebspunkte eines Pumpenaggregates, welches keinen Durchflusssensor aufweist, mit gleichen Betriebspunkten von Pumpenaggregaten, deren Durchfluss mittels eines Sensors ermittelt wird, dann kann durch entsprechende Anpassung der Programmierung des sensorlosen Pumpenaggregates dieses in seiner Betriebspunkterfassung verbessert werden.

Vorteilhaft werden mit dem erfindungsgemäßen Verfahren anhand der in der Datenbank gespeicherten Betriebsdaten von typgleichen Pumpenaggregaten oder Pumpenaggregatgruppen Pumpenparameter, insbesondere Pumpenkurven einer Vielzahl von Pumpenaggregaten oder Pumpenaggregatgruppen statistisch ausgewertet, beispielsweise durch Mittelwertbildung und Feststellung einer Standardabweichung und die ermittelten Mittelwertedaten zur Programmierung eines Pumpenaggregates oder einer Pumpenaggregatgruppe verwendet. Auf diese Weise können die typischerweise anhand elektrischer Werte des Motors errechneten hydraulischen Werte deutlich den tatsächlichen Gegebenheiten angepasst werden, wodurch die vom Pumpenaggregat angefahrenen Betriebspunkte näher an den tatsächlichen hydraulischen Betriebspunkten liegen. Auch hierdurch kann die Pumpensteuerung verbessert werden, insbesondere ist damit ein energetisch günstigerer Betrieb der Pumpenaggregate möglich.

Aufgrund der großen Anzahl von Pumpenaggregaten, die Daten über das Netzwerk zum zentralen Server liefern, können Gruppierungen von Pumpenaggregaten gebildet werden, die sich beispielsweise nur in Details voneinander unterscheiden, um so zum einen festzustellen, welche Auswirkungen in der Praxis diese Änderungen haben und zum anderen um die verwendeten Rechenmodelle innerhalb der Steuerungen weiter zu optimieren. So hat es sich beispielsweise gezeigt, dass das mathematische Pumpenmodell, welches bei gleichen Pumpentypen eingesetzt wird, die sich jedoch in der Anordnung des Durchflusssensors - bei einer Gruppe ist der Durchflusssensor im Saugstutzen und bei der anderen Gruppe im Druckstutzen angeordnet - unterschieden/verbessert werden kann. Selbst solche kleinen Unterschiede können somit zu Änderungen der Parameter des Pumpenmodells führen.

In analoger Weise können nach einer Weiterbildung des erfindungsgemäßen Verfahrens die Daten eines Betriebszustandes eines Pumpenaggregates oder einer Pumpenaggregatgruppe mit Daten von hinsichtlich den hydraulischen Gegebenheiten gleichen Betriebszuständen typgleicher Pumpenaggregate oder Pumpenaggregatgruppen aus der Datenbank verglichen werden, wobei wenn durch Vergleich ein insbesondere energetisch günstigerer Betriebszustand festgestellt wird, das Pumpenaggregat oder die Pumpenaggregatgruppen zum Erreichen dieses günstigeren Betriebszustandes programmiert wird. Es versteht sich, dass in einer Vielzahl der Anwendungsfälle ein Vergleich zu energetisch günstigeren Betriebszuständen erfolgen wird, um diesen Zustand auch bei anderen Pumpenaggregaten oder Pumpenaggregatgruppen zu erreichen. Das erfindungsgemäße Verfahren beschränkt sich jedoch nicht hierauf, es kann hier auch nach anderen Kriterien verglichen und angepasst werden, beispielsweise Laufruhe, Verschleißarmut und dergleichen. Dieses Verfahren ist insbesondere dazu geeignet, bei sogenannten Boosterpumpen, welche aus einer Gruppe von parallel geschalteten Pumpenaggregaten besteht, die lastabhängig zu- und abgeschaltet werden, die energetisch günstigsten Schaltpunkte zu ermitteln und diese Schaltpunkte zum Zu- und Abschalten der Pumpenaggregate der Gruppe einzuprogrammieren.

Das erfindungsgemäße Verfahren geht mit einem Programmierverfahren einher, bei dem ein programmierbares elektromotorisch angetriebenes Pumpenaggregat oder eine Pumpenaggregatgruppe unter Verwendung einer cloudbasierten Datenbank, welche Betriebsund/oder Programmierdaten von typgleichen im Betrieb befindlichen Pumpenaggregaten und/oder Pumpenaggregatgruppen beinhaltet, Daten des Pumpenaggregates oder der Pumpenaggregatgruppe mit in der Datenbank gespeicherten Datengruppen gleicher programmierbarer elektromotorisch angetriebener Pumpenaggregate oder Pumpenaggregatgruppen vergleicht und bei Feststellung einer vorbestimmten Abweichung die Programmierung des Pumpenaggregates oder der Pumpenaggregatgruppe angepasst. Dieser Vorgang kann selbsttätig, zum Beispiel in bestimmten Zeitabständen, erfolgen, er kann programmunterstützt jedoch manuell ausgelöst oder vollautomatisch ablaufen. Vorteilhaft kann das Resultat der Auswertung der Parameter und/oder der Betriebsdaten selber in der Datenbank gespeichert werden, und z.B. in einer kommenden Auswertung interaktiv benutzt werden.

Andererseits kann gemäß der Erfindung aufgrund der großen Anzahl von Daten von Pumpenaggregaten ein fehlerhaftes Pumpenaggregat anhand seiner Daten identifiziert werden. Beispielsweise im Falle eines defekten Sensors oder eines Fehlers in der Steuerungselektronik des Pumpenaggregates, können solche Fehler serverseitig vorzugsweise automatisiert identifiziert werden und neue Steuerungsdaten berechnet werden. Diese Daten können dann in der Programmierung des Pumpenaggregates so berücksichtigt werden, dass das Pumpenaggregat (bei einem Sensordefekt) nach Möglichkeit in weniger sensitiven Bereichen arbeitet, wodurch der Fehler zwar nicht behoben werden kann, aber zumindest unter Berücksichtigung des Fehlzustandes ein verbesserter Betrieb erzielt werden kann.

Zur Durchführung des erfindungsgemäßen Verfahrens ist ein Flüssigkeitspumpensystem erforderlich, welches eine Vielzahl von Pumpenaggregaten aufweist, die eine programmierbare elektronische Motorsteuerung für einzelne oder Gruppen von Pumpenaggregaten aufweisen und die über ein Netzwerk zumindest zeitweise mit einem Server datenverbunden sind, welcher eine Datenbank zur Speicherung von Parametern und/oder Betriebsdaten der Pumpenaggregate sowie eine Datenverarbeitungseinrichtung beinhaltet, die dazu ausgebildet ist, von den Pumpenaggregaten übermittelte Daten nach vorgegebenen Regeln, typischerweise statistischen Algorithmen, auszuwerten und anhand der ausgewerteten Daten mindestens ein einzelnes Pumpenaggregat in seiner Programmierung anzupassen. Diese Anpassung erfolgt vorzugsweise selbsttätig, sei es nach Installation des Pumpenaggregates oder nach festgelegten zeitmäßigen oder wertemäßigen Regeln. Das Flüssigkeitspumpensystem kann dabei vorteilhaft auf die bereits bestehenden und datenbankmäßig erfassten Pumpenaggregate (zum Beispiel Grundfos GRM) gestützt werden, so dass von Anfang an eine statistische Auswertung unter Zugrundelegung einer ausreichend großen Datenmenge gewährleistet ist. Die Vielzahl der bereits seit Jahren im Betrieb befindlichen Pumpenaggregate und Pumpenaggregatgruppen werden somit vorteilhaft in das Flüssigkeitspumpsystem gemäß der Erfindung eingebunden, um damit für einzelne Pumpenaggregate oder Pumpenaggregatgruppen, vorzugsweise solche, die neu installiert werden oder die besonders weit von den ermittelten Werten abweichen, hinsichtlich ihrer Programmierung entsprechend anzupassen. Die Auswertung des Flüssigkeitspumpensystems gemäß der Erfindung erfolgt vorteilhaft nach statistischen Regeln, beispielsweise die Mittelwertbildung und die Bestimmung der Standardabweichung und zwar sowohl für die Anpassung der Programmierung als auch für die Konsistenzprüfung der ermittelten Werte. Unter Flüssigkeitspumpensystem im Sinne der vorliegenden Erfindung ist ein System von einer Vielzahl von Pumpenaggregaten zu verstehen, die hinsichtlich ihrer Betriebsdaten/Parameter/Einstelldaten mit der vorzugsweise cloudbasierten Datenbank verbunden sind. Eine hydraulische oder elektrische Verbindung der Pumpenaggregate ist hierzu nicht erforderlich, sie kann jedoch in Teilbereichen bestehen.

Das Flüssigkeitspumpensystem ist vorteilhaft mit einem Netzwerk verbunden, welches internetbasiert ist, so dass weltweit Pumpenaggregate und Pumpenaggregatgruppen kostengünstig effektiv datenbankmäßig angebunden werden können. Dazu weisen die Pumpenaggregate oder Pumpenaggregatgruppen vorteilhaft einen Webserver auf, über den sie direkt an das Internet angebunden sind oder eine LAN vorzugsweise WLAN-Baugruppe, über die sie an ein lokales Netzwerk angebunden werden können, welches seinerseits dann mit dem Internet verbunden ist.

Das erfindungsgemäße Verfahren ist dabei nicht nur in der Lage, datenbankbasiert die Programmierung eines bestimmten Pumpenaggregates oder einer Pumpenaggregatgruppe anhand der erfassten und statistisch ausgewerteten Daten typgleicher Pumpenaggregate oder Pumpenaggregatgruppen anzupassen, sondern darüber hinaus auch festzustellen, dass ein bestimmtes Pumpenaggregat falsch dimensioniert ist, das heißt entweder die betrieblichen Anforderungen nicht erfüllen kann oder aber soweit überdimensioniert ist, so dass eine energetische Betriebspunktoptimierung auch nicht ansatzweise erfolgen kann. In einem solchen Fall kann in der Programmierung des Pumpenaggregates ein entsprechender Marker gesetzt werden, welcher entweder turnusmäßig abgefragt und datenbankmäßig erfasst wird oder aber vor Ort am Pumpenaggregat ein Signal erzeugt, welches dem Betreiber bei Wartungsarbeiten oder dergleichen dies zu erkennen gibt.

Besonders vorteilhaft ist es, wenn das Flüssigkeitspumpensystem gemäß der Erfindung eine erste Gruppe von Pumpenaggregaten aufweist, die mit jeweils mindestens einem Sensor zu Erfassung einer hydraulischen Größe, beispielsweise des Durchflusses, ausgestattet ist und deren Betriebsdaten anhand elektrischer Größen des Antriebs sowie der mindestens einen sensorisch erfassten hydraulischen Größe ermittelt werden und dieses Flüssigkeitspumpensystem eine zweite Gruppe typgleicher Pumpenaggregate aufweist, deren Betriebsdaten anhand elektrischer Größen des Antriebs ermittelt werden, wobei serverseitig die Betriebsdaten der zweiten Gruppe von Pumpenaggregaten unter Zugrundelegung der erfassten hydraulischen Daten der ersten Gruppe in der Programmierung angepasst werden. Mit dem erfindungsgemäßen Flüssigkeitspumpensystem ist es somit möglich, die typgleichen Pumpenaggregate der zweiten Gruppe durch die Anpassung der Programmierung so auszugestalten, dass die angepasste und rechnerisch ermittelten Betriebspunkte wesentlich näher an den tatsächlichen hydraulischen Betriebspunkten liegen als bisher, ohne dass eine gesonderte sensorische Erfassung dieser Betriebspunkte erforderlich ist. Dies kann in analoger Weise nicht nur hinsichtlich der Erfassung der Durchflussmenge, sondern alternativ oder zusätzlich auch durch Erfassung des Drucks erfolgen.

Die Erfindung ist nachfolgend anhand von in der Zeichnung dargestellten Ausführungsbeispielen näher erläutert. Es zeigen:

Fig. 1    in stark vereinfachter Darstellung die datenbankmäßige Verknüpfung einer Vielzahl von Pumpenaggregaten,

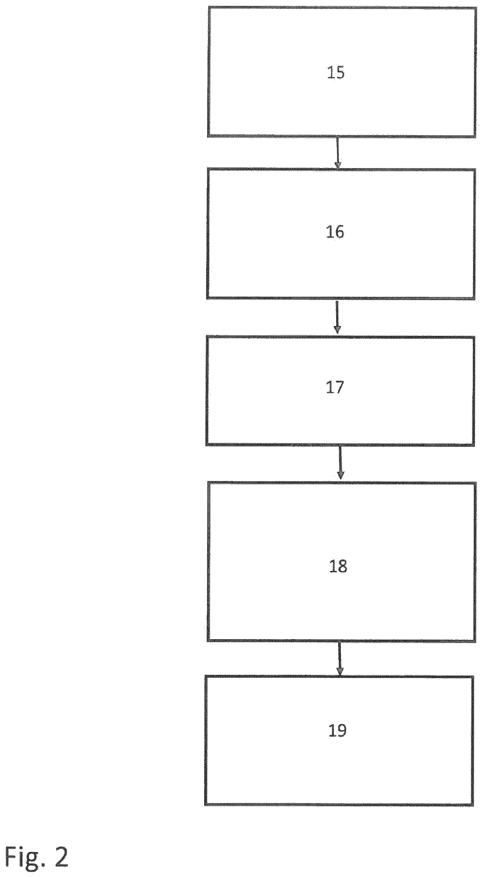

Fig. 2    ein Ablaufdiagramm von der Erfassung von Pumpendaten bis zur Umprogrammierung eines Pumpenaggregates,

Fig. 3    die Leistungsaufnahme eines aus mehreren Pumpen bestehenden Pumpenaggregates bei unterschiedlicher Übergangsdrehzahl und

Fig. 4    drei Pumpenkurven von Pumpenaggregaten desselben Typs.

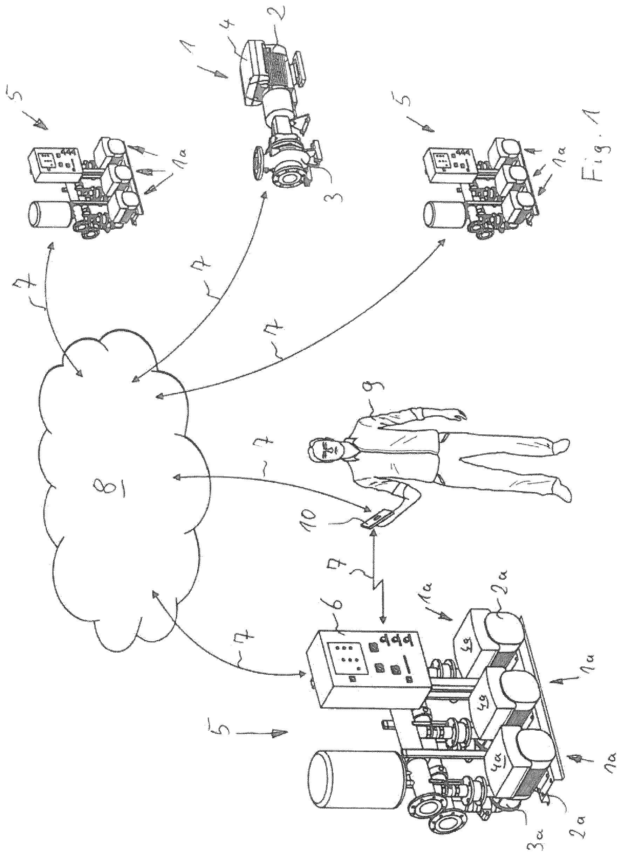

Das in Fig. 1 symbolhaft dargestellte Flüssigkeitspumpensystem weist ein Pumpenaggregat 1 mit einem Elektromotor 2 auf, welcher eine Kreiselpumpe 3 antreibt und der eine elektronische Motorsteuerung 4 aufweist, die Teil eines elektronischen Frequenzumrichters ist, welcher den Elektromotor 3 ansteuert. Die elektronische Motorsteuerung 4 ist programmierbar.

Weiterhin weist das in Fig. 1 dargestellte Flüssigkeitspumpensystem drei Pumpenaggregatgruppen 5 auf. Jede Pumpenaggregatgruppe 5 besteht aus drei Pumpenaggregaten 1a, jeweils angetrieben von einem Elektromotor 2a, der eine Kreiselpumpe 3a antreibt. Auch dort ist den Elektromotoren 2a jeweils eine elektronische Motorsteuerung 4a zugeordnet, die programmierbar ist und der eine zentrale elektronische Steuerung 6 übergeordnet ist, die ebenfalls programmierbar ist. Die Kreiselpumpen 3a sind hydraulisch parallel geschaltet, die Pumpenaggregate 1a werden von der elektronischen Steuerung 6, je nach Leistungsanforderung zu- oder abgeschaltet, so dass die Pumpenaggregatgruppe 5 im System praktisch ein Pumpenaggregat bildet, wie dies bei derartigen Boosterpumpen üblich ist.

Die in Fig. 1 dargestellten Pumpenaggregate 1 und 1a sowie die Pumpenaggregatgruppen 5 sind hier nur beispielhaft aufgeführt, in der Praxis wird ein solches Flüssigkeitspumpensystem aus tausenden typgleichen aber auch vom Typ her unterschiedlicher Pumpenaggregaten und Pumpenaggregatgruppen bestehen.

Das Pumpenaggregat 1 sowie die Pumpenaggregatgruppen 5 sind drahtlos an ein Netzwerk angebunden, wie die Datenverbindungspfeile 7 symbolisieren. Die Anbindung an eine cloudbasierte Datenbank erfolgt mittels des Internets, wodurch Pumpenaggregate überall auf der Welt Zugriff auf diese Datenbank haben. Die Datenbank bildet Teil eines Servers 8, der entweder softwareimplementiert sein kann oder durch einen oder mehrere konkret für diesen Zweck vorgesehene Computer mit entsprechendem Festspeicher gebildet ist, auf dem ein Datenbankprogramm läuft. Es sei in diesem Zusammenhang auf eine vorhandene Datenbank der Anmelderin, die Grundfos Hydrobooster MPC hingewiesen, die Daten der daran angebundenen Pumpenaggregate erfasst und deren Daten über eine Bedienperson 9, beispielsweise mittels eines Smartphones 10, auf dem eine entsprechende Softwareapplikation läuft, abfragbar sind. Das Smartphone 10 ist auch zur direkten Kommunikation mit der elektronischen Steuerung 6 vorgesehen, das heißt zur Programmierung und zur Einstellung der Steuerung vorgesehen und geeignet.

Die cloudbasierte Datenbank, also der Server 8, kann beispielsweise durch eine unter der Marke Azure® bekannte Plattform von der Firma Microsoft realisiert werden, die in der Lage ist, von unterschiedlichen Pumpenaggregaten 1, 1a und Pumpenaggregatgruppen 5 Daten zu empfangen, aufzubereiten und gegebenenfalls nach Aufbereitung an ein Pumpenaggregat 1, 1a zum Zwecke der Programmierung zu senden.

Die zum Server 8 übermittelten Daten können aktuelle Betriebsdaten, wie Motorstrom, Motorspannung, Drehzahl, gemessene Durchflussmenge, kalkulierte Durchflussmenge, gemessener Differenzdruck, kalkulierter Differenzdruck, Betriebszeit usw. sein aber auch nicht veränderbare Daten wie beispielsweise die Seriennummer des Pumpenaggregates, die Anzahl und Seriennummer der Sensoren, Länge und Durchmesser der angeschlossenen Leitungen, Orte der Anlage und dergleichen. Die Datenbank des Servers 8 umfasst somit eine Vielzahl von unterschiedlichen Daten unterschiedlicher Pumpenaggregate 1, 1a und Pumpenaggregatgruppen 5.

Serverseitig erfolgt die Verarbeitung der Daten in einem ersten Schritt 15, in welchem die Datensätze der einzelnen Pumpenaggregate empfangen werden. In einem Schritt 16 werden zunächst die von den unterschiedlichen Pumpenaggregaten und Pumpenaggregatgruppen empfangenen Daten zugeordnet, und zwar in Gruppen nach Pumpentypen aufgeteilt. So gibt es beispielsweise einen Pumpentyp der Boosterpumpen umfasst, das heißt Pumpenaggregatgruppen 5 bestehend aus mehreren Einzelaggregaten 1a, die jedoch durch eine gemeinsame elektronische Steuerung 6 angesteuert und programmiert werden. Eine weitere Gruppe bilden zum Beispiel die mehrstufigen Pumpen, eine andere Gruppe wiederrum ist den Heizungsumwälzpumpen zugeordnet. Dabei müssen die Gruppen nicht notwendigerweise nach der vorgenannten Art gruppiert werden, dies erfolgt so, wie es auswerteseitig am zweckmäßigsten erscheint. So können beispielsweise die Pumpenaggregatgruppen 5 einer Datengruppe zugeordnet werden, wohingegen deren Pumpenaggregate 1a einer anderen Datengruppe zugeordnet werden. Dabei ist es sinnvoll, die Daten der Pumpenaggregate zusammen zu führen, die später auch zu einer statistischen Auswertung oder zu einem Vergleich herangezogen werden sollen.

In einem Schritt 17 werden dann die jeweiligen Datensätze auf Konsistenz geprüft, wobei eine weitere Prüfung dahingehend erfolgt, ob die übermittelten Betriebsdaten innerhalb eines zuvor ermittelten durchschnittlichen Toleranzbandes liegen. Datensätze, die dieses Toleranzband überschreiten, werden aussortiert. Im Schritt 17 werden die Daten die einer Gruppe von Pumpenaggregaten zugeordnet sind, normiert, das heißt so weiter verarbeitet, dass Pumpenaggregate gleichen Typs aber unterschiedlicher Baugröße miteinander vergleichbar werden.

In einem Schritt 18 werden dann die von den Pumpenaggregaten übermittelten Daten mit Hilfe statistischer Methoden und/oder mathematischer Pumpmodelle aufbereitet und die insoweit datenbankmäßig überarbeiteten Daten in einem Schritt 19 an ein Pumpenaggregat 1, 1a oder eine Pumpenaggregatgruppe 5 übermittelt, bei welcher dann die vorhandenen Daten durch diese aufbereiteten Daten ersetzt werden.

Bei der Zuordnung der Datensätze zu Pumpengruppen müssen diese nicht notwendigerweise nur einer Gruppe zugeordnet werden, auch ist die Bildung von Untergruppen denkbar. Auch ist es möglich, die Pumpengruppen so zu bilden, dass Mehrfachüberschneidungen vorgesehen sind. So können beispielsweise Pumpenaggregate 1, 1a oder Pumpenaggregatgruppen 5, welche ein gleichartiges Verschleißteil, zum Beispiel eine Gleitringdichtung aufweisen, einer Gruppe zugeordnet werden. Andererseits ist deren Zuordnung zum Beispiel nach Fördermedium denkbar.

Wie eine solche Gruppierung aussehen kann, sei nachfolgend erläutert:

Die Tabelle A umfasst mehrstufige Pumpenaggregate der CR-Baureihe deren Seriennummer erfasst ist, deren Einsatzfeld erfasst ist und bei denen die Zeit zwischen aufeinanderfolgenden Wartungsintervallen erfasst ist. Weiterhin ist bei einem Teil dieser Pumpenaggregate die Fördermenge sensorisch erfasst, die in der Tabelle als Datenpaare (Zeitpunkt, Durchfluss) von Zeitpunkt des Messens und Größe des Durchflusses gespeichert ist.

Tabelle A

| Seriennummer | Name der Pumpe | Einsatzfeld | Zeit zwischen den aufeinanderfolgenden Wartungsintervallen (Std.) | Gemessener Fördermenge (Zeitpunkt, l/Std.) |
|---|---|---|---|---|
| 18495 | CR6 | Industrie | 4310 | 10:00, 1990<br>11:00, 1895<br>12:00, 1995 |
| 12112 | CR6 | Industrie | 2950 | 13:00, 2210<br>14:00, 2190<br>15:00, 2220 |
| 13180 | CR6 | Industrie | 3512 | Keine Daten |
| 7514 | CR6 | Wohnung | 1620 | 08:15, 1900<br>08:30, 1910<br>08:45, 1902 |
| 10712 | CR6 | Industrie | 4140 | 15:00, 1850<br>16:00, 2209<br>17:00, 2300 |
| 8212 | CR6 | Wohnung | 1770 | Keine Daten |

Wie die folgende Tabelle B zeigt, sind dort ebenfalls mehrstufige Kreiselpumpenaggregate der CR-Baureihe aufgeführt, bei denen die Seriennummer angegeben ist sowie der Typ der Schaftdichtung, die erwartete Standzeit der Dichtung und das Fördermedium.

Tabelle B

| Seriennummer | Name der Pumpe | Typ der Schaftdichtung | Zu erwartende Standzeit der Dichtung (Std.) | Fördermedium |
|---|---|---|---|---|
| 1255 | CR5 | Typ P | 12050 | Wasser |
| 1421 | CR5 | Typ P | 1800 | Wasser |
| 17643 | CR6 | Typ O | 600 | Glykol |
| 13210 | CR4 | Typ O | 800 | Glykol |
| 8212 | CR5 | Typ P | 9100 | Wasser |
| 1975 | CR4 | Typ O | 2100 | Öl |

Wie die beiden Tabellen A und B, die jeweils eine Gruppe repräsentieren, verdeutlichen, kann eine Sortierung nach unterschiedlichen Kriterien erfolgen.

Schließlich zeigt die folgende Tabelle C Heizungsumwälzpumpenaggregate der Typenreihen Alpha 1, Alpha 2 und Alpha 3 jeweils mit ihrer Seriennummer, der Art ihrer Regelung, den aktuellen Differenzdruck zu einem gegebenen Zeitpunkt und der gemessenen Fördermenge zu einem gegebenen Zeitpunkt.

Tabelle C

| Seriennummer | Name der Pumpe | Verwendung | Art ihrer Regelung | Differenzdruck (Zeitpunkt, m) | Gemessene Fördermenge (Zeitpunkt, l/Std.) |
|---|---|---|---|---|---|
| 1534 | Alpha 1 | Heizen | Proportional | 12:00, 3,2<br>12:30, 3,6<br>13:00, 4,0 | 12:00, 300<br>12:30, 305<br>13:00, 320 |
| 8422 | Alpha 2 | Heizen | Proportional | 12:00, 4,1<br>12:30, 4,1<br>13:00, 4,1 | 12:00, 360<br>12:30, 360<br>13:00, 360 |
| 21987 | Alpha 1 | Heizen | Konstanter Druck | 04:27, 2,9<br><br>04:28, 2,8<br>04:29, 2,9 | 04:27, 200<br><br>04:28, 201<br>04:29, 199 |
| 77865 | Alpha 1 | Heizen | Proportional | 06:00, 3,3<br>12:00, 3,3<br>18:00, 3,5 | 06:00, 267<br>12:00, 267<br>18:00, 271 |
| 5423 | Alpha 3 | Heizen | Konstanter Druck | 22:10, 3,6<br><br>22:30, 3,6<br>22:55, 3,7 | 22:10, 295<br><br>22:30, 291<br>22:55, 298 |
| 53142 | Alpha 1 | Heizen | Konstanter Druck | 08:00, 4,8<br><br>09:00, 4,7<br>10:00, 4,7 | 08:00, 1477<br><br>09:00, 1600<br>10:00, 1755 |

Die Gruppierung erfolgt im Verfahrensschritt 16.

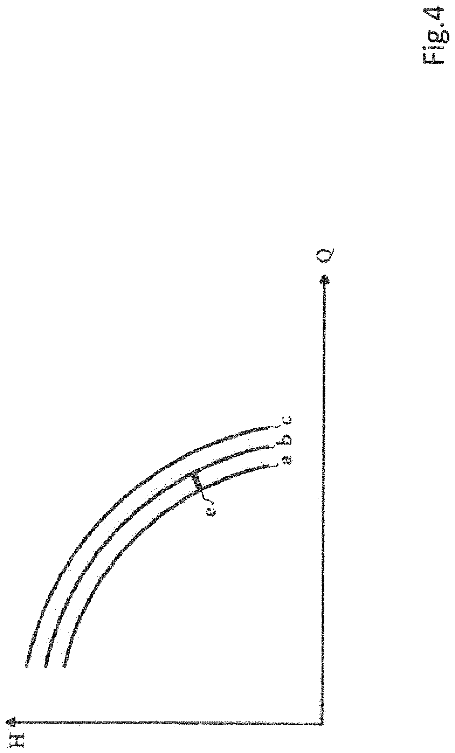

Das Prinzip des Verfahrens basiert also darauf, die Daten von einer Vielzahl von Pumpenaggregaten oder Pumpenaggregatgruppen, die bereits zum Beispiel weltweit im Betrieb sind und deren Daten cloudbasiert erfasst werden, so auszuwerten, dass der Betrieb einzelner Pumpenaggregate oder Pumpenaggregatgruppen dadurch verbessert werden kann oder bei Neuinbetriebnahme eine Programmierung der elektronischen Motorsteuerung unter Zugrundelegung bereits laufender und im Betrieb befindlicher vergleichbarer Pumpenaggregate/Pumpenaggregatgruppen erfolgen kann. Dabei können beispielsweise durch Auswertung der serverseitigen Daten die Pumpenkurven einer Vielzahl von typgleicher Pumpenaggregate oder Pumpenaggregatgruppen statistisch ausgewertet werden, um diese möglichst nahe an die tatsächlichen Betriebspunkte heranzubringen. Wie Fig. 4 zeigt, ergeben sich von drei typgleichen Pumpen Pumpenkurven a, b und c, die voneinander beabstandet sind und nicht übereinstimmen. Nach statistischer Auswertung einer Vielzahl solcher Pumpenkurven wird in der Programmierung eines einzelnen Pumpenaggregates eine sich aus dem Mittelwert ergebende Pumpenkurve abgelegt, welche anhand einer Vielzahl von Pumpenaggregaten ermittelt worden ist.

So kann das erfindungsgemäße Verfahren nicht nur, wie einleitend beschrieben, dazu herangezogen werden, bei typgleichen Pumpenaggregaten, die teils mit einem hydraulischen Sensor und teils ohne einen hydraulischen Sensor (Druck- oder Durchflusssensor) betrieben werden, durch Vergleich der aufgrund der elektrischen Werte modellberechneten Betriebspunkte mit den sensorisch ermittelten tatsächlichen Betriebspunkten hinsichtlich der Modellrechnung erheblich präzisiert werden, es können somit auch die den Pumpenaggregaten zugrunde gelegten Pumpenkurven auf ein wesentlich breiteres statistisches Fundament gestellt werden als dies mit den aufwendigen aber im Vergleich wenigen Labormessungen möglich ist.

Der Durchfluss durch eine Pumpe, also der zeitliche Verlauf des Fördervolumenstroms wird bei sensorlosen Pumpenaggregaten basierend aus den folgenden beiden Gleichungen ermittelt:

$$\Delta p = a_{h2} q^2 + a_{h1} qn + a_{h0} n^2 \qquad (1)$$

$$P = a_{t2}q^2 n + a_{t1}qn^2 + q_{t0}n^3 + B_1 n^2 + B_0 n + P_0 \qquad (2)$$

mit

| | |
|---|---|
| $\Delta p$ | Differenzdruck zwischen Pumpeneingang und Pumpenausgang bzw. Pumpengruppeneingang und -ausgang (Boosterpumpen) |
| $P$ | Elektrische Leistung |
| $q$ | Durchflussmenge durch eine Pumpe |
| $n$ | Drehzahl der Pumpe |
| $a_{h2}$, $a_{h1}$, $a_{h0}$ | Parameter des den Pumpendruck repräsentierenden mathematischen Modells |
| $a_{t2}$, $a_{t1}$, $a_{t0}$, $B_1$, $B_0$, $P_0$ | Parameter des die Pumpenleistung repräsentierenden mathematischen Models |

Aus der Gleichung (1) kann aufgrund der Druckdifferenz $\Delta p$ der Pumpe bzw. der Pumpengruppe und der Drehzahl n der Durchfluss q errechnet werden. Aus der Gleichung (2) ist es möglich, den Durchfluss q aus der Pumpenleistung P und der Pumpendrehzahl n zu berechnen. Diese Berechnungen hängen von den Parametern $a_{h2}$ bis $a_{h0}$ und $a_{t2}$ bis $a_{t0}$ ab. Wenn sowohl die Leistung P als auch der Differenzdruck $\Delta p$ und die Drehzahl n bekannt sind, kann der Durchfluss q wie folgt berechnet werden.

$$q = \lambda_1 \frac{P}{n^2} + \lambda_2 \frac{\Delta p}{n} + \lambda_3 n + \lambda_4 + \lambda_5 \frac{1}{n} + \lambda_6 \frac{1}{n^2} \qquad (3)$$

| | |
|---|---|
| $\lambda_1$, $\lambda_2$, $\lambda_3$, $\lambda_4$, $\lambda_5$, $\lambda_6$ | Parameter des den Durchfluss repräsentierenden Models unter Verwendung der vorgenannten Differenzdruck- und Leistungsmodelle |

Die Durchflussberechnung hängt von den Parametern $\lambda_1$ bis $\lambda_6$ ab, die typischerweise durch Tests herstellerseitig ermittelt werden. Diese Arbeiten sind zeitaufwendig und teuer. Aus diesem Grunde sind diese Parameter meist nur für einige Pumpen verfügbar und werden für andere interpoliert. Wie die Fig. 4 zeigt, welche drei Pumpenkurven a, b und c von drei verschiedenen typgleichen Pumpen darstellt, weisen diese Kurven eine Streuung e zwischen der Pumpe a und der Pumpe b auf. Betrachtet man die Pumpen a und c ist diese Streuung noch größer. Wenn also nur eine Pumpe, zum Beispiel die Pumpe b vermessen wird, so ergibt sich selbst bei typgleichen Pumpen eine nicht unerhebliche Streuung in den Pumpenkurven. Um diese Streuung zu verringern, ist vorgesehen, auf der Grundlage von großen Datenmengen, wie sie datenbankseitig auf dem Server 8 von einer Vielzahl von Pumpenaggregaten zur Verfügung stehen, die Parameter der obigen Gleichungen anhand der Vielzahl von typgleichen Pumpenaggregaten und durch statistische Auswertung vergleichsweise genau zu bestimmen, und zwar nach Möglichkeit unter Verwendung der Daten von Pumpenaggregaten, bei denen Differenzdruck $\Delta p$ und/oder Volumenstrom q sensorisch ermittelt werden. Da die Leistung und die Drehzahl der Pumpe aufgrund der entsprechenden Motordaten stets zur Verfügung stehen, kann mit diesen Informationen die Gleichung (2) verbessert werden, so dass Parameter gefunden werden, welche das durchschnittliche elektrische/hydraulische Verhalten des betreffenden Pumpenaggregattyps beschreiben. Wenn neben dem Differenzdrucksensor auch ein Strömungssensor vorhanden ist, können die Parameter der Gleichungen (1) und (3) bestimmt werden. Die Bestimmung erfolgt mit bekannten mathematischen Verfahren, beispielsweise durch lineare Regression. Dabei erfolgt eine kontinuierliche Aktualisierung der Parameter der Gleichung (1). Die gesuchten Parameter werden als Parametervektoren gesammelt und mit bekannten Methoden aktualisiert, so dass es nicht notwendig ist, diese aus den gesamten Daten jedes Mal neu zu berechnen, wenn ein Parametersatz angefordert wird.

Da insbesondere bei der drahtlosen Kommunikation ein Verlust von Datenpaketen oder Dateien eintreten kann, muss vor einer Parameteraktualisierung in jedem Falle überprüft werden, ob der verwendete Datensatz konsistent ist. Dabei wird der zu verwendende Datensatz in dem bereits verfügbaren Modell verwendet und dahingehend überprüft, ob der damit ermittelte Wert innerhalb der Standardabweichung des verwendeten Modells liegt. Ist dies nicht der Fall, wird der Datensatz zur weiteren Bestimmung der Parameter nicht verwendet. Dabei ist es sinnvoll, zur Bestimmung der Parameter nicht nur typgleiche Pumpenaggregate zu verwenden, sondern nach Möglichkeit solche, die vergleichbar eingesetzt werden, und die etwa die gleichen Betriebsstunden aufweisen, um so etwaige Verschleißerscheinungen kompensieren zu können.

Das Verfahren kann beispielsweise auch dafür verwendet werden, um bei Boosterpumpen, bei denen eine Gruppe 5 von Pumpenaggregaten 1a parallel betrieben werden, und die durch die gemeinsame elektronische Steuerung 6 die Pumpen je nach Bedarf zuund abgeschaltet werden, die energetisch günstigen Schaltpunkte zu ermitteln. Die Zuschaltung erfolgt dabei häufig nach einfachen Regeln, beispielsweise wird die nächste Pumpe zugeschaltet, wenn die bereits laufenden Pumpen 95% ihrer Maximaldrehzahl erreicht haben. Dies ist energetisch häufig nicht günstig.

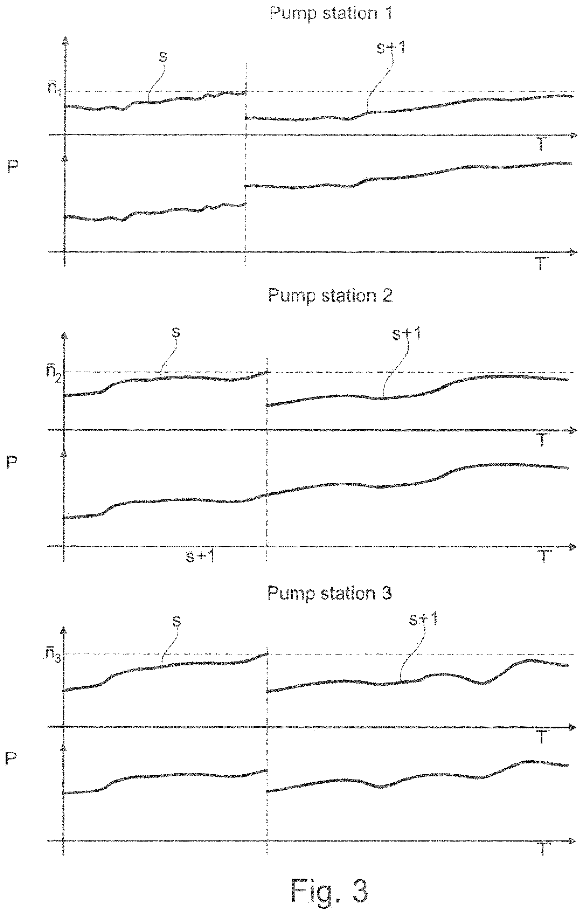

So werden beispielsweise die Daten von drei Pumpenaggregatgruppen in deren zeitlichen Verlauf ausgewertet, wie anhand von Fig. 3 dargestellt ist. Die drei Pumpenaggregatgruppen haben unterschiedliche Schaltdrehzahlen $\bar{n}$, die Pumpenaggregatgruppe 1 (Pumpstation 1) hat eine Schaltdrehzahl $\bar{n}_1$, die niedriger ist als die Schaltdrehzahl $\bar{n}_2$ der Pumpenaggregatgruppe 2 (Pumpstation 2), die wiederrum niedriger ist als die Schaltdrehzahl $\bar{n}_3$ der Pumpenaggregatgruppe 3 (Pumpstation 3). Vergleicht man nun die Leistungsaufnahme P (Power) über die Zeit T (Time) in Abhängigkeit der laufenden Pumpenzahl s, so wird deutlich, dass die Pumpstation 2 die energetisch günstigste Umschaltdrehzahl $\bar{n}$ aufweist. Diese Schaltschwelle, die durch Auswertung der Betriebsdaten anhand der Datenbank 8 erfolgt, kann automatisiert erfolgen und zur Anpassung der Umschaltdrehzahl solcher Pumpstationen dienen, sei es bei Installation oder nach einer bestimmten Zeit. Da diese Einstellungen von den Druckverhältnissen am Eingang der Boosterpumpe abhängig sind, muss immer dann, wenn sich der Eingangsdruck deutlich ändert, die Schaltdrehzahl $\bar{n}$ neu ermittelt werden. Dann wird nach vergleichbaren Daten von Boosterpumpen in der Datenbank gesucht und anhand dieses Vergleichs, der ähnlich wie der anhand von Fig. 3 beschriebene erfolgt, dann erneut die für die Pumpstation günstigste Umschaltdrehzahl berechnet.

**Patentansprüche**

1. Verfahren zum Betreiben mindestens eines Pumpenaggregats (1, 1a, 5) von einer Vielzahl von Pumpenaggregaten (1, 1a), die jeweils eine programmierbare elektronische Motorsteuerung (4, 4a, 6) für einzelne oder Gruppen von Pumpen aufweisen und die über ein Netzwerk zumindest zeitweise mit einem Server (8) datenverbunden sind, bei dem Daten, insbesondere Parameter und/oder Betriebsdaten der Vielzahl von Pumpenaggregaten (1, 1 a, 5) über das Netzwerk zu dem Server (8) übermittelt und dort

   in einer Datenbank gespeichert werden und gespeicherte Daten nach vorgegebenen Rechenregeln verarbeitet werden, wonach dann das mindestens eine Pumpenaggregat (1, 1a, 5) anhand der verarbeiteten Daten über das Netzwerk in seiner Programmierung angepasst wird, **dadurch gekennzeichnet, dass** bei einer ersten Gruppe von Pumpenaggregaten Betriebsdaten anhand elektrischer Größen des Antriebs sowie mindestens einer

   erfassten hydraulischen Größe ermittelt werden, und dass bei einer zweiten Gruppe von typgleichen Pumpenaggregaten Betriebsdaten anhand elektrischer Größen des Antriebs erfasst werden und dass serverseitig die Betriebsdaten der zweiten Gruppe von Pumpenaggregaten unter Zugrundelegung der erfassten hydraulischen Daten der ersten Gruppe in der Programmierung angepasst werden.

2. Verfahren nach Anspruch 1, **dadurch gekennzeichnet, dass** Daten von Pumpenaggregaten (1, 1a, 5) unterschiedlicher Typen in der Datenbank erfasst und zum Zwecke der Verarbeitung gruppiert werden.

3. Verfahren nach einem der vorhergehenden Ansprüche, **dadurch gekennzeichnet, dass** Daten, insbesondere Betriebsdaten typgleicher Pumpenaggregate statistisch ausgewertet werden und dann das mindestens eine Pumpenaggregat, wenn es eine vorbestimmte Abweichung von den ausgewerteten Daten aufweist, in seiner Programmierung angepasst wird.

4. Verfahren nach einem der vorhergehenden Ansprüche, **dadurch gekennzeichnet, dass** anhand der in der Datenbank gespeicherten Betriebsdaten von typgleichen Pumpenaggregaten oder Pumpenaggregatgruppen Pumpenparameter, insbesondere Pumpenkurven (a, b, c) einer Vielzahl von Pumpenaggregaten oder Pumpenaggregatgruppen statistisch ausgewertet werden und die ermittelten Mittelwertdaten zur Programmierung eines Pumpenaggregats oder einer Pumpenaggregatgruppe verwendet werden.

5. Verfahren nach einem der vorhergehenden Ansprüche, **dadurch gekennzeichnet, dass** Daten eines Betriebszustandes eines Pumpenaggregats oder einer Pumpenaggregatgruppe mit Daten von hinsichtlich den hydraulischen Gegebenheiten gleichen Betriebszuständen typgleicher Pumpenaggregate oder Pumpenaggregatgruppen aus der Datenbank verglichen werden, wobei durch Vergleich ein insbesondere energetisch günstigerer Betriebszustand festgestellt wird und das Pumpenaggregat oder die Pumpenaggregatgruppe zum Erreichen dieses günstigeren Betriebszustandes programmiert wird.

**6.** Verfahren nach Anspruch 5, **dadurch gekennzeichnet, dass** bei einer Pumpenaggregatgruppe die Schaltpunkte zum Zu- und Abschalten der Pumpenaggregate der Gruppe programmiert werden.

**7.** Flüssigkeitspumpensystem mit einer Vielzahl von Pumpenaggregaten (1, 1a, 5), die eine programmierbare elektronische Motorsteuerung (4, 4a, 6) für einzelne oder Gruppen von Pumpenaggregaten aufweisen und die über ein Netzwerk zumindest zeitweise mit einem Server (8) datenverbunden sind, welcher eine Datenbank zur Speicherung von Parametern und/oder Betriebsdaten der Pumpenaggregate (1, 1a, 5) sowie eine Datenverarbeitungseinrichtung beinhaltet, und der dazu ausgebildet ist, von den Pumpenaggregaten (1, 1a, 5) übermittelte Daten nach vorgegebenen Regeln auszuwerten und anhand der ausgewerteten Daten mindestens ein einzelnes Pumpenaggregat (1, 1a, 5) in seiner Programmierung anzupassen, **gekennzeichnet durch** eine erste Gruppe von Pumpenaggregaten, die mit jeweils mindestens einem Sensor zur Erfassung einer hydraulischen Größe ausgestattet ist und deren Betriebsdaten anhand elektrischer Größen des Antriebs sowie der mindestens einen erfassten hydraulischen Größe ermittelt werden, und durch eine zweite Gruppe typgleicher Pumpenaggregate, deren Betriebsdaten anhand elektrischer Größen des Antriebs ermittelt werden, wobei der Server so ausgebildet ist, dass serverseitig die Betriebsdaten der zweiten Gruppe von Pumpenaggregaten unter Zugrundelegung der erfassten hydraulischen Daten der ersten Gruppe in der Programmierung angepasst werden.

**8.** Flüssigkeitspumpensystem nach Anspruch 7, **dadurch gekennzeichnet, dass** der Server derart ausgebildet ist, dass die Auswertung nach statistischen Regeln erfolgt.

**9.** Flüssigkeitspumpensystem nach Anspruch 7 oder 8, **dadurch gekennzeichnet, dass** das Netzwerk internetbasiert ist und die Pumpenaggregate oder Pumpenaggregatgruppen einen Webserver aufweisen oder über ein LAN, vorzugsweise ein WLAN mit dem Internet datenverbunden sind.

**Claims**

**1.** A method for operating at least one pump assembly (1, 1a, 5) of a multitude of pump assemblies (1, 1a) which each comprise a programmable electronic motor control (4, 4a, 6) for individual pumps or groups of pumps and which are at least temporarily data-connected to a server (8) via a network, with which data, in particular parameters and/or operating data of the multitude of pump assemblies (1, 1a, 5) is transferred via the network to a server (8) and is stored there in a data base, and stored data is processed according to defined computation rules, whereupon the at least one pump assembly (1, 1a, 5) is then adapted in its programming via the network on the basis of the processed data, **characterised in that** with a first group of pump assemblies, operating data is determined by way of electrical variables of the drive as well as by way of at least one detected hydraulic variable, and that with a second group of pump assemblies of the same type, operating data is acquired by way of electrical variables of the drive, and that on the server side, the operating data of the second group of pump assemblies is adapted in the programming on the basis of the detected hydraulic variables of the first group.

**2.** A method according to claim 1, **characterised in that** the data of pump assemblies (1, 1a, 5) of different types is acquired in the data base and is grouped for the purpose of processing.

**3.** A method according to one of the preceding claims, **characterised in that** data, in particular operating data of pump assemblies of the same type is statistically evaluated, and at least one pump assembly is then adapted in its programming, if it has a predefined deviation from the evaluated data.

**4.** A method according to one of the preceding claims, **characterised in that** pump parameters, in particular pump curves (a, b, c) of a multitude of pump assemblies or pump assembly groups are statistically evaluated on the basis of the operating data, stored in the data base, of pump assemblies of the same type or of pump assembly groups of the same type, and the determined mean data is used for programming a pump assembly or a pump assembly group.

**5.** A method according to one of the preceding claims, **characterised in that** data of an operating state of a pump assembly or of a pump assembly group is compared to data from the data base, of operating states which are the same with regard to the hydraulic situations, of pump assemblies or pump assembly groups, of the same type, wherein an in particular energetically more favourable operating state is determined by the comparison, and the pump assembly or the pump assembly group is programmed for reaching this more favourable operating state.

6. A method according to claim 5, **characterised in that** with a pump assembly group, the switching points for connecting and disconnecting the pump assemblies of the group are programmed.

7. A fluid pump system with a multitude of pump assemblies (1, 1a, 5) having a programmable electronic motor control (4, 4a, 6) for individual or groups of pump assemblies and being at least temporarily data-connected to a server (8) via a network, said server comprising a data base for storing parameters and/or operating data of the pump assemblies (1, 1a, 5) as well as comprising a data processing device and being designed to evaluate data transferred from the pump assemblies (1, 1a, 5) according to predefined rules, and to adapt at least an individual pump assembly (1, 1a, 5) in its programming on the basis of the evaluated data, **characterised by** a first group of pump assemblies which is provided in each case with at least one sensor for detecting a hydraulic variable and whose operating data is determined by way of electrical variables of the drive as well as by way of at least one detected hydraulic variable, and by a second group of pump assemblies of the same type whose operating data is determined by way of electrical variables of the drive, wherein the server is designed such that on the server side, the operating data of the second group of pump assemblies is adapted in the programming on the basis of the detected hydraulic data of the first group.

8. A fluid pump system according to claim 7, **characterised in that** the server is designed in a manner such that the evaluation is effected according to statistical rules.

9. A fluid pump system according to claim 7 or 8, **characterised in that** the network is internet based and the pump assemblies or pump assembly groups comprise a web server or are connected to the internet via a LAN, preferably a WLAN.


## Revendications

1. Procédé de fonctionnement d'au moins un groupe motopompe (1, 1a, 5) parmi une pluralité de groupes motopompes (1, 1a) qui présentent respectivement une commande électronique programmable de moteur (4, 4a, 6) pour des groupes motopompes individuels ou des batteries de groupes motopompes et sont en liaison de données au moins temporairement avec un serveur (8) par l'intermédiaire d'un réseau, dans lequel des données, en particulier des paramètres et/ou des données de fonctionnement de la pluralité de groupes motopompes (1, 1a, 5) sont transmis(es) au serveur (8) par l'intermédiaire du réseau et y sont stockées dans une base de données et des données stockées sont traitées en respectant des règles de calcul prédéfinies, après quoi la programmation du groupe motopompe (1, 1a, 5), au moins au nombre de un, est adaptée par l'intermédiaire du réseau sur la base des données traitées, **caractérisé en ce que**, pour une première batterie de groupes motopompes, des données de fonctionnement sont déterminées sur la base de grandeurs électriques de l'entraînement et d'au moins une grandeur hydraulique détectée, et **en ce que**, pour une seconde batterie de groupes motopompes de même type, des données de fonctionnement sont détectées sur la base de grandeurs électriques de l'entraînement, et **en ce que**, côté serveur, la programmation des données de fonctionnement de la seconde batterie de groupes motopompes est adaptée en se basant sur les données hydrauliques détectées de la première batterie.

2. Procédé selon la revendication 1, **caractérisé en ce que** des données de groupes motopompes (1, 1a, 5) de différents types sont enregistrées dans la base de données et regroupées en vue du traitement.

3. Procédé selon l'une des revendications précédentes, **caractérisé en ce que** des données, en particulier des données de fonctionnement de groupes motopompes de même type, sont évaluées de manière statistique et la programmation du groupe motopompe, au moins au nombre de un, est adaptée s'il présente un écart prédéterminé par rapport aux données évaluées.

4. Procédé selon l'une des revendications précédentes, **caractérisé en ce que** des paramètres de pompage, en particulier des courbes de pompage (a, b, c) d'une pluralité de groupes motopompes ou de batteries de groupes motopompes, sont évalués de manière statistique sur la base des données de fonctionnement, stockées dans la base de données, de groupes motopompes ou de batteries de groupes motopompes de même type, et les données de valeur moyenne déterminées sont utilisées pour la programmation d'un groupe motopompe ou d'une batterie de groupes motopompes.

5. Procédé selon l'une des revendications précédentes, **caractérisé en ce que** des données d'un état de fonctionnement d'un groupe motopompe ou d'une batterie de groupes motopompes sont comparées avec des données d'états de fonctionnement, identiques en ce qui concerne les conditions hydrauliques et issues de la base de données, de groupes motopompes ou de batteries de groupes motopompes de même type, suite à quoi un état de fonctionnement en particulier plus favorable du point de vue énergétique est déterminé par comparaison, et le groupe motopompe ou la batterie de groupes motopompes est programmé(e) pour atteindre ledit état de fonctionnement plus favorable.

6. Procédé selon la revendication 5, **caractérisé en ce que**, pour une batterie de groupes motopompes, les points de commutation pour la mise sous tension et hors tension des groupes motopompes de la batterie sont programmés.

7. Système de pompage de liquide comprenant une pluralité de groupes motopompes (1, 1a, 5) qui présentent une commande électronique programmable de moteur (4, 4a, 6) pour des groupes motopompes individuels ou des batteries de groupes motopompes et qui sont en liaison de données au moins temporairement par l'intermédiaire d'un réseau avec un serveur (8) qui contient une base de données permettant le stockage de paramètres et/ou de données de fonctionnement des groupes motopompes (1, 1a, 5) et un dispositif de traitement de données, et qui est conçu pour évaluer selon des règles prédéfinies des données transmises par les groupes motopompes (1, 1a, 5) et pour adapter la programmation d'au moins un groupe motopompe (1, 1a, 5) individuel sur la base des données évaluées, **caractérisé par** une première batterie de groupes motopompes équipée respectivement d'au moins un capteur permettant de détecter une grandeur hydraulique et dont les données de fonctionnement sont déterminées sur la base de grandeurs électriques de l'entraînement et de la grandeur hydraulique détectée, au moins au nombre de une, et par une seconde batterie de groupes motopompes de même type, dont les données de fonctionnement sont déterminées sur la base de grandeurs électriques de l'entraînement, le serveur étant conçu de telle sorte que, côté serveur, la programmation des données de fonctionnement de la seconde batterie de groupes motopompes est adaptée en se basant sur les données hydrauliques détectées de la première batterie.

8. Système de pompage de liquide selon la revendication 7, **caractérisé en ce que** le serveur est conçu de telle sorte que l'évaluation intervient en respectant des règles statistiques.

9. Système de pompage de liquide selon la revendication 7 ou 8, **caractérisé en ce que** le réseau est basé sur Internet et les groupes motopompes ou les batteries de groupes motopompes présentent un serveur web ou sont en liaison de données avec Internet par l'intermédiaire d'un réseau local, de manière préférée d'un réseau local sans fil.

Fig. 1

Fig. 2

Fig. 3

Fig.4

**IN DER BESCHREIBUNG AUFGEFÜHRTE DOKUMENTE**

**In der Beschreibung aufgeführte Patentdokumente**

- WO 2013041616 A1
- CN 202284531 U
- WO 2013149281 A1
- US 20150095100 A1